(19)

**Europäisches Patentamt**
**European Patent Office**
**Office européen des brevets**

(11)　**EP 3 061 104 B1**

(12)　# EUROPÄISCHE PATENTSCHRIFT

(45) Veröffentlichungstag und Bekanntmachung des Hinweises auf die Patenterteilung:
**11.05.2022　Patentblatt 2022/19**

(21) Anmeldenummer: **14820732.7**

(22) Anmeldetag: **19.10.2014**

(51) Internationale Patentklassifikation (IPC):
*H01F 7/122* (2006.01)　　*H01F 7/16* (2006.01)

(52) Gemeinsame Patentklassifikation (CPC):
**H01F 7/1646; H01F 7/122; H01F 7/1615; H01H 50/20;** H01H 33/6662; H01H 2051/2218

(86) Internationale Anmeldenummer:
**PCT/DE2014/100374**

(87) Internationale Veröffentlichungsnummer:
**WO 2015/058742 (30.04.2015 Gazette 2015/17)**

(54) **ELEKTROMECHANISCHER AKTOR**

ELECTROMECHANICAL ACTUATOR

ACTIONNEUR ÉLECTROMÉCANIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.10.2013　DE 102013017508**
**05.04.2014　DE 102014004888**
**01.06.2014　DE 102014007771**
**22.09.2014　DE 102014013723**

(43) Veröffentlichungstag der Anmeldung:
**31.08.2016　Patentblatt 2016/35**

(60) Teilanmeldung:
**21198085.9 / 3 955 269**

(73) Patentinhaber: **Rhefor GbR**
**12203 Berlin (DE)**

(72) Erfinder: **MECKLENBURG, Arno**
**10999 Berlin (DE)**

(74) Vertreter: **Behr, Wolfgang**
**Lorenz Seidler Gossel**
**Rechtsanwälte Patentanwälte**
**Partnerschaft mbB**
**Widenmayerstraße 23**
**80538 München (DE)**

(56) Entgegenhaltungen:
EP-A1- 1 430 490　　EP-A1- 1 430 490
EP-A2- 0 114 354　　EP-A2- 0 114 354
FR-A1- 2 934 923　　FR-A1- 2 934 923
GB-A- 2 197 754　　GB-A- 2 197 754
GB-A- 2 325 567　　GB-A- 2 325 567
US-A- 4 829 947　　US-A1- 2006 231 050

**Beschreibung**

TECHNISCHES GEBIET

Die vorliegende Erfindung betrifft das Gebiet der elektromechanischen Aktoren, beispielsweise einen Umkehrhubmagnet.

HINTERGRUND

Umkehrhubmagnete sind allgemein bekannt und Stand der Technik. Zum Beispiel werden bistabile Ausführungen zum Antrieb elektrischer Mittelspannungsschaltgeräte genutzt, wobei zur Stromversorgung der Magnete Elektrolytkondensatoren gebraucht werden. Weitere Anwendungsfelder finden sich beispielsweise in Magnetventilen, die leistungslos einen Zustand gegen eine Rückstellkraft halten können sollen. Daneben finden sich vielzählige weitere Anwendungen, unter anderem in Sortier- und Förderanlagen, aber auch im Automotive-Bereich (insb. Getriebetechnik, Zentralverriegelungen, Schaltsperren) sowie in Strickmaschinen. Wichtige mögliche Einsatzgebiete sind auch im Bereich der sogenannten Heißkanaltechnik gegeben (betätigen der Nadeln von Spritzgießwerkzeugen) und im Bereich der Roboter-Schweißzangen (nachführen der Schweißelektroden, wobei der erforderliche Spielausgleich durch Federn gewährleistet werden kann).

Ein Nachteil bekannter Umkehrhubmagnete, der häufig einen Einsatz derselben anstelle pneumatischer oder hydraulischer Antriebe (oder kraftschlüssig verriegelter Federspeicher) ausschließt, ist deren oftmals geringer elektrischen Wirkungsgrad. Dieser führt in Mittelspannungsschaltgeräten mit (bistabilen) Umkehrhubmagneten zu erheblichen Kosten, in erster Linie bedingt durch die teuren Elektrolytkondensatoren. In anderen Bereichen der Technik, insbesondere bei Ventilen in Motoren -zum Beispiel Gasventilen in großen Gasmotoren- führt der geringe elektrische Wirkungsgrad zu einer unerwünschten Begrenzung der zulässigen Schaltfrequenz bzw. -häufigkeit durch die in den Spulen auftretende Verlustleistung (die Spulen würden bei höheren Schaltfrequenzen thermisch zerstört werden).

Ein weiterer Nachteil bekannter Umkehrhubmagnete besteht in deren geringer Dynamik, da insbesondere bei vergleichsweise langhubigen Antrieben (langhubig im Vergleich zum Magnetdurchmesser) oftmals nur eine geringe Anfangskraft zur Verfügung steht und außerdem verhältnismäßig große Totzeiten unvermeidlich sind. So sollen Leistungsschalter Kurzschlüsse schnellstmöglich vom Netz trennen oder beim Ausschalten den Nulldurchgang des Stromes treffen oder beim Einschalten den der Spannung; hierzu ist eine hohe Dynamik bei kurzen Totzeiten erforderlich - dies gelingt mit herkömmlichen Umkehrhubmagneten nur mangelhaft.

Schließlich ist ein Nachteil bekannter bistabiler Umkehrhubmagnete darin zu sehen, dass diese tendenziell die höchste Ankergeschwindigkeit aufweisen, wenn der Anker zum Ende eines Stellvorganges eine Hubendlage erreicht. Dies führt zu einem hohen Aufwand für die Endlagendämpfung oder begrenzt die Lebensdauer des Magneten.

In manchen Anwendungen, vor allem in Ventilen und elektrischen Schaltgeräten, sollen Umkehrhubmagnete monostabil sein statt bistabil um ggf. leistungslos eine sichere Endlage einnehmen zu können.

Ein Antrieb gemäß dem Oberbegriff von Anspruch 1 ist aus Druckschrift GB 2 325 567 A bekannt.

Weitere elektromechanische Aktoren sind in den Druckschriften GB 2 197 754 A, EP 114 354 A2, FR 2 934 923 A1 und EP 1 430 490 A1 gezeigt.

Die der Erfindung zugrunde liegende Aufgabe liegt also darin, den elektrischen Wirkungsgrad polarisierter Umkehrhubmagnete, insbesondere bistabiler, zu erhöhen. Des Weiteren sollen die neuen Magnete eine, verglichen mit bekannten Umkehrhubmagneten, hohe Dynamik bei verringerten Totzeiten aufweisen können. Außerdem ist eine allgemeine Forderungen an Aktuatoren eine kompakte Bauweise.

ZUSAMMENFASSUNG DER ERFINDUNG

Die genannte Aufgabe wird durch einen Antrieb gemäß Anspruch 1 gelöst.

Unterschiedliche ausführungsformen, Weiterentwicklungen und Anwendungen sind Gegenstand der abhängigen Ansprüche.

Die vorliegende Erfindung zeigt dabei einen Antrieb der zumindest einen Anker, mindestens einen weichmagnetischen Rahmen, mindestens eine Spule sowie mindestens einen Permanentmagneten aufweist, der an dem oder den Ankern befestigt ist, wobei Rahmen und Anker so ausgebildet sind, dass der durch Bestromen von der (den) Spule(n) erzeugte magnetische Fluss zumindest teilweise den (die) Permanentmagnet(e) durchsetzt, sodass auf diese(n) eine Kraft wirkt, die auf den Anker übertragen wird; die Anordnung aus Anker, Rahmen und Permanentmagnet(en) dabei so beschaffen ist, dass der von der oder den Spulen erzeugte magnetische Fluss senkrecht zur Polarisationsrichtung des oder der Permanentmagnete während der Hubbewegung zumindest teilweise inhomogen ist, die von der oder den Spulen hervorgerufene und von Permanentmagnet(en) gespürte magnetische Flussdichte also einen Gradienten senkrecht zur Polarisationsrichtung der Permanentmagnete aufweist, wobei Anker und Rahmen so ausgebildet sind, dass der (oder die) Anker mitsamt dem oder den daran befestigten Permanentmagneten zumindest teilweise in den Rahmen eintauchen kann; und wobei der Anker so ausgestaltet ist, dass dessen zunehmendes Eintauchen in den Rahmen während einer Hubbewegung zwar die Reluktanz des Magnetkreises vermindert, den oder die Permanentmagnete aber zumindest nicht vollständig kurzschließt, und dass der (oder die) Anker sowie der Rahmen geometrisch so ausgestaltet sind, dass zum Ende des Hubes eine Haltekraft auftritt. Dabei ist vorgesehen, dass der Antrieb zwei mit Permanentmagneten bestückte Anker und zwei Induktionsspulen aufweist, wobei die Anker über eine Schubstange starr miteinander verbunden sind.

Gemäß einer optionalen Ausgestaltung der Erfindung weist der permanentmagnetisch polarisierte Umkehrhubmagnet weiterhin ein Federsystem auf, welches auf den Anker in beiden Hubendlagen eine in Bewegungsrichtung zur Hubmittellage (d.h. zur Mitte zwischen den beiden Hubendlagen) hin gerichtete Kraft ausübt. Dabei ist das Federsystem so auszulegen, dass in mindestens einer Hubendlage die Federkraft betragsmäßig kleiner ist als die auf den Anker wirkende Gesamt-Reluktanzkraft im statischen, unbestromten Fall, sodass der Anker entgegen der Federkraft permanentmagnetisch in mindestens einer Endlage stabil gehalten werden kann.

Als Federsystem kommen nicht nur solche mit mechanischen Federn in Betracht sondern auch magnetische oder pneumatische. Entscheidend ist, dass in beiden Hubendlagen eine in Richtung der Hubmittellage, welche zwischen beiden Hubendlagen liegt, wirkende Kraft auf den Anker bzw. das Ankersystem übertragen werden kann. Für bistabile Magnete ist das Federsystem so auszugestalten, dass die im Federsystem gespeicherte potentielle Energie in beiden Hubendlagen möglichst gleich groß ist. Die Federkraft muss in beiden Hubendlagen betragsmäßig kleiner sein als die zugehörige Reluktanzkraft im statischen, unbestromten Fall. Sofern die Anwendung, welche vom Umkehrhubmagneten gestellt werden soll, selbst eine Rückstellkraft erzeugt, so ist diese bei der Auslegung des Federsystems entsprechend zu berücksichtigen. Dies ist zum Beispiel in Vakuumleistungsschaltern der Fall, deren Kontaktandruckfedern hier als Teil des Federsystems aufzufassen sind.

Die erfindungsgemäßen Antriebe sollen so ausgestaltet werden können, dass sie, bezogen auf ihr Volumen, größere Kräfte erzeugen können (als bekannte Umkehrhubmagnete). Letztlich soll der Antrieb auch monostabil ausgeführt werden können und dennoch kurze Stellzeiten und hohe Wirkungsgrade aufweisen können.

KURZE BESCHREIBUNG DER ABBILDUNGEN

Die Erfindung wird nachfolgend anhand eines in der Abbildung dargestellten Beispiels näher erläutert. Die Darstellung ist nicht zwangsläufig maßstabsgetreu und die Erfindung beschränkt sich nicht nur auf die dargestellten Aspekte. Vielmehr wird Wert darauf gelegt, die der Erfindung zugrunde liegenden Prinzipien darzustellen. Dabei zeigt:

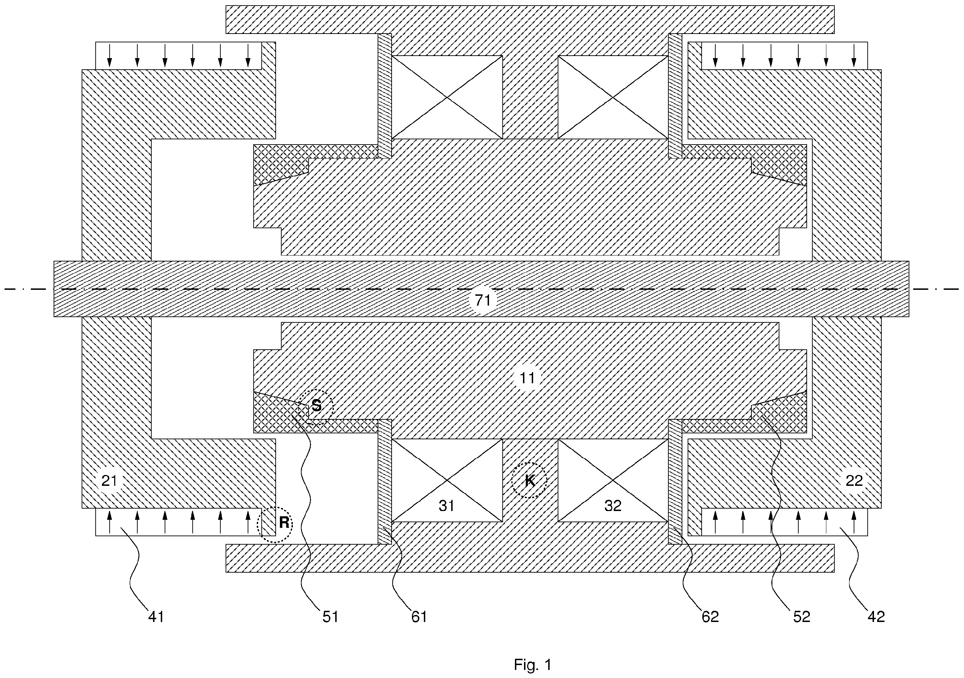

Figur 1    ein rotationssymmetrisches Ausführungsbeispiel eines Antriebs gemäß der vorliegenden Erfindung.

DETAILLIERTE BESCHREIBUNG DER AUSFÜHRUNGSBEISPIELE

Nachfolgend wird zunächst der im Rahmen der vorliegenden Erfindung optionale Einsatz eines Federsystems am Beispiel bistabiler Umkehrhubmagnete erläutert. Infolge des Federsystems setzt der Anker sich aus jeder Hubendlage in Richtung der Hubmittellage in Bewegung, sobald infolge einer elektrischen Gegenerregung die Haltekraft (Die Haltekraft ist definiert als Gesamt-Reluktanzkraft auf den Anker in der jeweiligen Hubendlage) betragsmäßig kleiner wird als die Federkraft. Hierzu ist eine weitaus geringere elektrische Leistung erforderlich als bei konventionellen bistabilen Umkehrhubmagneten ohne Federsystem, auch kann die zugehörige (externe) Kraftanstiegsrate weitaus höher sein. Beispielsweise gilt in einem herkömmlichen bistabilen Umkehrhubmagneten auch in der Hubanfangslage näherungsweise:

$$F_{ext} = (F_{Spalt1} + F_{spalt2}) - F_{Anschlag} = 1/(2*\mu 0)*(A1*B_{Spalt1}{}^2 + A2*B_{Spalt2}{}^2) - F_{anschlag}$$

Wobei A1 und A2 die (entgegengesetzten) Polflächen des Ankers sind und $F_{Anschlag}$ eine die Endlagen-Anschläge abbildende Funktion.

Zur Veranschaulichung werde angenommen, dass Luftspalt Spalt2 bis auf einen Restluftspalt geschlossen ist und dieser Restluftspalt einen Fluss mit einer Dichte von 2T führt ($B_{Spalt2} = 2T$), während Luftspalt Spalt1 voll geöffnet ist und keinen Fluss führt ($B_{Spalt1} = 0T$). Damit die auf den Anker wirkende Summe der entgegengesetzten Reluktanzkräfte $F_{Spalt1} + F_{Spalt2}$ entlang der axialen Bewegungsrichtung des Ankers das Vorzeichen wechselt, muss unter der Voraussetzung A1 = A2 die Flussdichte in Spalt1 größer werden als die in Spalt2. Hierzu kann eine große elektrische Leistung erforderlich sein, da Spaltl voll geöffnet ist. In einfachster Näherung ist der zur Erzeugung einer gegebenen Flussdichte im Luftspalt erforderliche Strom der Luftspaltlänge proportional, die zugehörige Verlustleistung geht aber mit dem Strom quadratisch.

Für sehr kleine Hübe kann unter Vernachlässigung von Streufeld und Wirbelströmen (statischer oder quasistatischer Fall) angenommen werden, dass der in beiden Luftspalten Spaltl und Spalt2 durch die Gegenerregung erzeugte Flussdichtehub betragsmäßig gleich groß ist. In diesem, für herkömmliche bistabile Umkehrhubmagnete günstigsten Fall wäre im vorliegenden Beispiel ein Flussdichtehub von je 1T erforderlich (Spalt1: 0T -> 1T, Spalt2: 2T->1T) um auch nur die Haltkraft vollständig zu kompensieren.

Nun werde der gleiche Magnet mit einem Federsystem ausgerüstet, welches in der zuvor beschriebenen Hubanfangslage (Position "0") eine Kraft $F_{Feder}(0)$ in Richtung der Hubmittellage ausübt, die halb so groß sei wie die (Halte-)Kraft. Damit genügt eine Minderung des Flusses in Spalt2 von 2T auf (sqrt(2))T, um die über Spalt2 auf den Anker wirkende Reluktanzkraft gleich groß werden zu lassen wie die Federkraft. Damit steht bereits die über Spalt1 auf den Anker wirkende Reluktanzkraft zur Beschleunigung des Ankers zur Verfügung; und das bei einem Flussdichtehub (an Spalt2) von lediglich ~0.59T. Wenn, wie im vorangegangenen Beispiel, infolge elektrischer Gegenerregung die Flussdichte in Spalt2 von 2T auf 1T vermindert und in Spaltl von 0T auf 1T erhöht wird, steht zur Beschleunigung des Ankers in der Hubanfangslage 0 sogar die Hälfte der Federkraft zur Beschleunigung des Ankers zur Verfügung ($F_{Feder}$-$F_{Spalt2}$ bei $B_{Spalt2}$=1T) *zuzüglich* einer Reluktanzkraft $F_{Spalt1}$, welche bei 1T ein Viertel derjenigen Kraft erzeugt, die bei 2T erzeugt werden würde. Unter erneuter Annahme A1 = A2 ist dies eine näherungsweise gleich große Kraft wie die von der Feder erzeugte. Damit kann der Antrieb bei einem Flussdichtehub von 1T (+1T in Spalt1, -1T in Spalt 2) unmittelbar in der Hubanfangslage trotz voll geöffneten Arbeitsluftspalts Spaltl eine Kraft erzeugen, welche ungefähr der Hälfte der Haltekraft entspricht, entsprechend der eingesetzten Federkraft. In dieser groben Näherung an einem für herkömmliche bistabile Umkehrhubmagnete besonders günstigen Fall zeigt sich bereits, dass Antriebe mit einem Federsystem eine weitaus geringere elektrische Leistung benötigen, um sich in Bewegung zu setzen - wobei der Antrieb vorteilhaft so ausgelegt wird, dass der größte Teil der initial den Anker beschleunigenden Energie dem Federsystem entnommen und nicht etwa elektrisch aufgewendet wird. Es zeigt sich weiter, dass die Ankerbewegung, im Vergleich zu herkömmlichen Magneten, bereits bei weitaus geringeren Flussdichtehüben ermöglicht werden kann, was wiederum kurze Totzeiten ermöglicht (natürlich auf Kosten der effektiven Haltekraft, die sich aus der Summe von Feder- und Reluktanzkräften ergibt).

Wichtig für das Verständnis diese optionalen Aspekts der Erfindung ist, dass der Anker zunächst überwiegend mit Federkraft beschleunigt werden kann, wozu nur eine verhältnismäßig geringe elektrische Leistungsaufnahme erforderlich ist (zur Gegenerregung). Sich bewegende bzw. beschleunigte elektrische Maschinen können weitaus höhere elektrische Wirkungsgrade aufweisen als solche, die aus der Ruhelage starten. Dies liegt letztlich daran, dass die vom Antrieb verrichtete Arbeit ein Integral der Kraft über den Stellweg ist, die Verlustwärme aber ein Integral der Verlustleistung über die Zeit. Damit ist klar, dass eine Verkürzung der Stellzeit, also eine Verkleinerung des Integrationsintervalls in der Zeit-Domäne, tendenziell zu einer Zunahme des elektrischen Wirkungsgrades führt. Ebenso ist klar, dass ein "Festklemmen" des Ankers in irgendeiner Position zu einem Wirkungsgrad von Null führen muss, da das Arbeitsintegral verschwindet und die Integrationszeit eskaliert.

Ein Aspekt des hier beschriebenen Beispiels ist also, dass für das Auslösen der Bewegung nur eine geringe Gegenerregung erforderlich ist, die schnell erzeugt werden kann. Ein weiterer Aspekt besteht darin, dass ein symmetrisches Federsystem in Abwesenheit magnetischer Felder und in Abwesenheit von Reibung den Anker zwischen seinen Endlagen binnen einer gewissen Schwingungszeit hin- und herbewegen könnte, ohne dass hierzu überhaupt Energie eingesetzt werden müsste. Zu diesem Zweck muss das Federsystem so ausgelegt werden, dass die darin elastisch gespeicherte (potentielle) Energie in beiden Hubendlagen möglichst gleich groß ist. Bei einem so ausgelegten Federsystem muss lediglich die o.g. Gegenerregung erzeugt und dem Antrieb so viel elektrische Leistung zugeführt werden, dass dieser sich in Bewegung setzen, die Reibung überwinden und ggf. zusätzlich Nutzarbeit verrichtet werden kann. Im Gegensatz dazu muss beim herkömmlichen bistabilen Umkehrhubmagneten zuerst eine wesentlich größere Gegenerregung erzeugt werden, was mit entsprechenden ohmschen Verlusten verbunden ist. Sodann muss der Anker ausschließlich mit Hilfe elektrischer Leistung beschleunigt werden, was vergleichsweise langsam erfolgt und daher ebenfalls energieintensiv ist. Der Magnet muss auch Reibung überwinden und Nutzarbeit verrichten, doch eben mit wiederum geringem Wirkungsgrad, u.a. wegen der langen Stellzeiten durch die üblicherweise geringe Kraft und Kraftanstiegsrate bei Hubbeginn. Zumeist erreicht der herkömmliche bistabile Umkehrhubmagnet seine höchste Ankergeschwindigkeit, wenn der Anker das Hubende trifft. Hierbei wird die dem Anker mitgeteilte kinetische Energie in Wärme, Schall und unvermeidlich auch in die plastische Deformation von Antriebskomponenten umgewandelt. Diese hohe kinetische Energie infolge der hohen Geschwindigkeit beim Auftreffen in die Hubendlage ist einerseits ggf. für den Zweck des Antriebs vergeudet, andererseits bedroht sie dessen Lebensdauer durch starken Verschleiß und macht ggf. eine aufwendige und kostspielige Endlagendämpfung erforderlich. Im Gegensatz dazu wird bei Antrieben mit Federsystem die kinetische Energie des Ankers (und ggf. damit mechanisch verbundener weiterer, z.B. anwendungsseitiger Teile) zu großem Teil wiederum im Federsystem gespeichert ("rekuperiert") und steht damit für einen nächsten Stellvorgang in entgegengesetzter Richtung zur Verfügung (von (Reibungs-)Verlusten abgesehen).

Zusammengefasst müssen Antriebe mit Federsystem in der Regel weniger Arbeit verrichten als herkömmliche Umkehrhubmagnete, um in endlicher Zeit von einer Hubendlage in die andere zu fahren. Und infolge der "Vorbeschleunigung" durch das Federsystem können sie diese kleinere erforderliche Arbeit auch noch mit höherem elektrischem Wirkungsgrad verrichten. Dies führt zu entsprechend kleinen Verlustleistungen und ermöglicht höhere Schaltfrequenzen, wo diese bislang durch die Velustleistung bzw. (integral) Verlustwärme begrenzt wurden.

Bei kleinen Hüben, wenn also die Arbeitsluftspalte in guter Näherung als "klein" bzw. "kurz" angenommen werden können, weisen die Antriebe mit Federsystem große Vorteile gegenüber herkömmlichen bistabilen Umkehrhubmagneten auf: Die Totzeit der hier beschriebenen Antriebe ist in der Regel geringer, die Stellzeit ist geringer, der Wirkungsgrad ist höher, die Endlagen-Geschwindigkeit wiederum geringer. Zwar weisen die neuartigen Magnete in bistabiler Ausführung infolge des Federsystems im unbestromten Fall jeweils mindestens einen Rastpunkt auf, der keiner Hubendlage entspricht. Die Magnete können aber ohne weiteres so ausgelegt werden, dass der Anker dennoch magnetisch gegen die Rückstellkraft des Federsystems in die angestrebte Hubendlage befördert wird. Beim Betrieb an einer schaltbaren (Konstant-) Spannungsquelle kann der Magnet so ausgelegt sein, dass er bei einem regelmäßigen Stellvorgang infolge Gegeninduktion aus der oder den Spulen seinen Gleichgewichtsstrom bei weitem nicht erreicht. Wird nun infolge des Verhaltens der mechanischen Last, beispielsweise hoher Reibung, der Antrieb in der Umgebung seiner Raststelle "eingefangen", so steigt der Strom und damit, mit gewisser Verzögerung durch Selbstinduktion und Wirbelstromeffekte, die auf den Anker wirkende Reluktanzkraft, welche schließlich immer genügen kann, das Federsystem erneut zu spannen und den Anker in die angestrebte Endlage zu befördern.

Bei langhubigen Antrieben (d.h. der Hub in Längsrichtung ist lang als die Breite des Luftspaltes in Querrichtung), bei denen also die o.g. Näherung des "kleinen Luftspaltes" nicht erfüllt ist, ist dagegen ein Einrasten im Federsystem leichter möglich. Auch zeigt sich hier eine behebbare Schwäche derder langhubigen Ausführung des Antriebs: Die höchste Ankergeschwindigkeit kann, je nach Auslegung des Federsystems und Lastverhalten, im Bereich der Hubmittellage erreicht werden, wenn also die Arbeitsluftspalte des einfachen Ankers weit geöffnet sind. Weit geöffnete Luftspalte führen allerdings zu niedrigen "Kraftkonstanten" (tatsächlich Kraftfunktionen), d.h. ein gegebener Strom erzeugt nur eine geringe Reluktanzkraft. Dies konterkariert den oben beschriebenen Zweck - eben dort, wo mit zusätzlichem Antrieb durch die Federkraft höchste Ankergeschwindigkeiten erreicht werden, wo folglich theoretisch ein hoher elektrischer Wirkungsgrad darstellbar ist, sind die "Kraftkonstanten" am Antrieb mit Federsystem *ohne Kennlinienbeeinflussung* klein, was den Vorteil des Federsystems beeinträchtigen kann.

Antriebe mit Federsystem sind deshalb, falls ihre Hübe derartig groß sind, dass die zugehörigen Arbeitsluftspalte nicht in jedem regelmäßigen Betriebszustand als "klein" genähert werden können, vorteilhaft mit einem Mittel zur Kennlinienbeeinflussung auszurüsten. Handelt es sich bei diesem Mittel um eine geometrische Kennlinienbeeinflussung, so ist diese mit dem Federsystem abzustimmen. Die Kennlinienbeeinflussung kann auch die Reihenreluktanz der Arbeitsluftspalte mindern und damit helfen, die erforderliche Auslöseleistung zu minimieren.

Im Folgenden wird ein weiteres Beispiel des Einsatzes eines Federsystems anhand eines monostabilen Umkehrhubmagneten erläutert. Monostabile Ausführungen der Erfindung werden erhalten, indem die auf den Anker bzw. das Ankersystem wirkende Reluktanzkraft im stationären, unbestromten Fall nur in der einen, nicht jedoch in der anderen Hubendlage größer ist als die zugehörige Federkraft. Feder und Magnet werden dabei so auf einander abgestimmt, dass die Summe aus Federkraft und Reluktanzkraft im stationären, unbestromten Fall ("stationäre Gesamtkraft") an jedem Punkt des Stellweges das gleiche Vorzeichen aufweist. Im unbestromten Fall ist der Antrieb also nur dann stabil, wenn der Anker (bzw. das Ankersystem) sich in seiner einen stabilen Hubendlage befindet. Betragsmäßig muss die stationäre Gesamtkraft (aus magnetischer- und Federkraft) größer sein als die auf das System möglicherweise wirkende Reibung; gegebenenfalls muss die zugehörige stationäre Gesamtkraft-Kennlinie bezüglich möglicher Rückstellkräfte auf die jeweilige Anwendung abgestimmt sein (bspw. der pneumatische Druck, wenn der monostabile Antrieb ein Pneumatikventil, wie es beispielsweise in Automatik-Getrieben verwendet wird, überwinden soll).

In der instabilen Endlage darf im stationären, unbestromten Fall die Reluktanzkraft nicht durch magnetische Sättigung begrenzt werden. Das heißt, in demjenigen magnetischen Teilkreis, der die am Stator anliegende(n) Haftfläche(n) des Ankers einschließt, soll keinesfalls und in keinem Bereich über den gesamten wirksamen Eisenquerschnitt magnetische Sättigung auftreten. Auf diese Weise kann durch Bestromen der Spule(n) die Reluktanzkraft in der unbestromt instabilen Hubendlage soweit erhöht werden, dass der Magnet entgegen der Federkraft auch in dieser ("zweiten") Hubendlage (meta-)stabil ist, solange die hierzu erforderliche elektrische Leistung aufgewendet wird. Hier sollte der Magnet dahingehend bemessen sein, dass mit möglichst geringer elektrischer Leistung eine möglichst große Erhöhung der Reluktanzkraft in der "instabilen" ("zweiten") Hubendlage erreicht wird - dies ist auch wichtig, um den Magneten mit hohen Einschaltdauern in der instabilen Endlage halten zu können. Was das Federsystem betrifft, so muss dieses nicht linear sein. Vorzugsweise hat es eine progressive Charakteristik bezüglich der stabilen Hubendlage, das heißt, die das Ankersystem in Richtung der Hubmittellage treibende Federkraft nimmt stärker als linear zu, wenn das Ankersystem sich der stabilen ("ersten") Hubendlage nähert. Dies ist auch durch Kombination mehrerer linearer Federn zu erreichen.

Ein (hier: rotationssymmetrisches) Ausführungsbeispiel eines erfindungsgemäßen Antriebs ist in Fig. 1 dargestellt, das optionale Federsystem wird wiederum nicht gezeigt. Der Magnet in Fig. 1 weist einen Stator 11 auf, zwei Anker 21, 22, zwei Spulen 31, 32 sowie eine Schubstange 71, welche die beiden Anker starr verbindet. (Anm: Bei Antrieben gem. Fig. 1 ist es allgemein von Vorteil, die Spulen 31, 32 gleichsinnig in Reihe zu schalten). Infolge des magnetischen Kurzschlusses K kann sich der Magnet wie ein Doppelhubmagnet verhalten, bestehend aus zwei einzelnen Rücken-an-Rücken montierten Magneten, welche dieselbe Antriebsachse teilen. Wesentlich für diese Ausführung der Erfindung ist die Befestigung der Permanentmagnete am Anker. Beim Eintauchen eines Ankers in Stator 11 wird dieser Anker gegenüber Stator 11 mit Hilfe der Permanentmagnete unter eine magnetische Spannung gesetzt. Bestromen der zugehörigen Spule führt je nach Stromrichtung zu einer attraktiven oder repulsiven Kraft auf den Permanentmagneten, welche dieser auf den Anker überträgt. Dies erhöht den Gestaltungsspielraum des Magneten stark, da in reinen Reluktanzmagneten keine repulsiven Wechselwirkungen auftreten, jedenfalls nicht auf den weichmagnetischen Anker. Im Grunde entspricht der Magnet bis dahin weitgehend einem Tauchspulenantrieb, bei dem Permanentmagnet und Erregerspule vertauschte Rollen einnehmen. In Abweichung davon weist der Magnet aber zusätzliche (radiale) "Luftspalte" auf, ohne die nicht wie beschrieben die Anker unter (nennenswerter) magnetischer Spannung gegenüber dem Stator stehen könnten. Jedenfalls sind die Anker nicht zu *großflächig* magnetisch leitend mit dem Stator 11 verbunden. Die gegenständlichen radialen Luftspalte sind hier beispielsweise mit einem Gleitlagerwerkstoff 51, 52 aufgefüllt (die auch als Notlauflager dienen können, im dargestellten Modell ist Raum für Gleitlager an der Antriebsachse vorgesehen). Diese erforderlichen radialen Luftspalte können wie in Fig. 1 ausgestaltet sein, die Kennlinie(n) des Antriebs entsprechend der jeweiligen Anwendung zu beeinflussen. Beispielsweise kann Stufe S der Erzeugung einer besonders hohen Kraftanstiegsrate im Bereich der Hubmittellage dienen, auch im unbestromten Fall - insbesondere bei Ausführungen ohne Federsystem ist dies unter Umständen erforderlich, um ein Stehenbleiben des Ankers in einer undefinierten Position zu verhindern. Ohne zusätzlichen Luftspalt wäre bei längeren Hüben kein Teil des Magneten in der Lage, eine Haltekraft zu erzeugen, da jeder Anker seinen Permanentmagneten bei zu tiefem Eintauchen in den Stator magnetisch kurzschließen würde.

Die Permanentmagnete können beispielsweise als diametral oder radial polarisierte Kreissegmente ausgebildet sein. Ein bistabiler Antrieb kann auch mit nur einem der beiden quasi Rücken-an-Rücken montierten Magnete, also einer "Antriebshälfte", erhalten werden, und zwar, indem der andere durch eine dementsprechend zu bemessende Feder bzw. ein Federsystem ersetzt wird. Solche Antriebe müssen auch nicht rotationssymmetrisch aufgebaut sein. Nicht-rotationssymmetrische Varianten können außerdem mit einer transversalen Flussführung realisiert werden, um besonders langhubige Antriebe darzustellen. Vorteil von Antrieben gemäß Fig. 1 ist, dass sie bei Verwendung von Permanentmagneten hoher Energiedichte bemerkenswert hohe Kraftkonstanten bei vergleichsweise langen Hüben aufweisen können. Die Antriebe sind sehr vielseitig. Die Kombination mit einem Federsystem, welches das Ankersystem aus jeder der beiden Hubendlagen in Richtung der Hubmittellage treibt, ermöglicht sehr schnelle Antriebe mit hohem Wirkungsgrad, hohen Kraftkonstanten, daher hohen Hubarbeiten, und dennoch geringem Verschleiß, da die Ankergeschwindigkeit vor Erreichen der Hubendlage durch das Federsystem erheblich vermindert wird. Wird dagegen auf ein Federsystem verzichtet und als "Notlauflager" 51, 52 ein elektrisch gut leitendes Metall verwendet, so wirken die Notlauflager zugleich als Wirbelstrombremsen und ermöglichen langsame Ankerbewegungen, bei denen die volle stationäre Kraft bei gegebenem Strom nur aufgebaut wird, sobald der Anker bspw. durch Reibung oder die Last *festgehalten* wird. Während des Stellvorganges stellt sich quasi ein dynamisches Gleichgewicht zwischen Antriebskraft und Wirbelstrombremse ein. Die "Wirbelstrombremsen" (hier als Notlauflager ausgebildet), die auch an dem oder den Ankern anstatt am Stator befestigt sein können, dämpfen auch Prellvorgänge. Die an den Ankern befestigten Permanentmagneten (PM) stellen auch eine eine Art magnetisches Federsystem dar.

Für hochdynamische Antriebe mit insbesondere mechanischen Federn bietet sich an, rotationssymmetrische Ausführungen des Magneten, oder zumindest solche mit rotationssymmetrischem Innenpol, aus SMC-Werkstoffen aufzubauen. Spanend bearbeitete Teile aus Vollmaterial sind besser für die langsamere "federlose" Ausführung geeignet (also solche ohne mechanische oder pneumatische Federn), vor allem bei Verwendung der beschriebenen Wirbelstrombremsen. Der magnetische Rückschluss R ermöglicht einerseits eine leichte Montage der Permanentmagnete, denen er auch als Anschlag dient, beeinflusst aber gleichsam die Kennlinie stark und erhöht vor allem die Kraft zum Hubbeginn.

Optional weist der Umkehrhubmagnet ein Federsystem auf, welches auf den Anker in beiden Hubendlagen eine in Bewegungsrichtung zur Hubmittellage hin gerichtete Kraft ausübt. Dabei ist das Federsystem so auszulegen, dass in mindestens einer Hubendlage die Federkraft betragsmäßig kleiner ist als die auf den Anker wirkende Gesamt-Reluktanzkraft im statischen, unbestromten Fall, sodass der Anker entgegen der Federkraft permanentmagnetisch in mindestens einer Endlage stabil gehalten werden kann. Für bistabile Magnete ist das Federsystem möglichst so auszugestalten, dass die im Federsystem gespeicherte potentielle Energie in beiden Hubendlagen gleich groß ist und die Federkraft in beiden Hubendlagen betragsmäßig kleiner ist als die zugehörige Reluktanzkraft im stationären, unbestromten Fall. Sofern die Anwendung, welche vom Umkehrhubmagneten gestellt werden soll, selbst eine Rückstellkraft erzeugt, so ist diese bei der Auslegung des Federsystems entsprechend zu berücksichtigen. Erfindungsgemäße Antriebe können, falls ihre Hübe derartig groß sind, dass die zugehörigen Arbeitsluftspalte nicht in jedem regelmäßigen Betriebszustand als "klein" genähert werden können, Mittel zur Kennlinienbeeinflussung aufweisen. Diese sind erfindungsgemäß mit dem Federsystem abzustimmen. Die erfindungsgemäße Kennlinienbeeinflussung kann im Fall geometrischer Kennlinienbeeinflussung auch die Reihenreluktanz der Arbeitsluftspalte vermindern und damit helfen, die erforderlichen Auslöseleistungen zu minimieren.

**Patentansprüche**

1. Antrieb der zumindest einen Anker (21), mindestens einen weichmagnetischen Rahmen (11), mindestens eine Spule (31) sowie mindestens einen Permanentmagneten (41) aufweist, der an dem oder den Ankern befestigt ist,

   wobei Rahmen und Anker so ausgebildet sind, dass der durch Bestromen von der (den) Spule(n) (31) erzeugte magnetische Fluss zumindest teilweise den (die) Permanentmagnet(e) (41) durchsetzt, sodass auf diese(n) eine Kraft wirkt, die auf den Anker übertragen wird;
   die Anordnung aus Anker, Rahmen und Permanentmagnet(en) dabei so beschaffen ist, dass der von der oder den Spulen (31) erzeugte magnetische Fluss senkrecht zur Polarisationsrichtung des oder der Permanentmagnete während der Hubbewegung zumindest teilweise inhomogen ist, die von der oder den Spulen (31) hervorgerufene und von Permanentmagnet(en) (41) gespürte magnetische Flussdichte also einen Gradienten senkrecht zur Polarisationsrichtung der Permanentmagnete (41) aufweist,
   wobei Anker (21) und Rahmen (11) so ausgebildet sind, dass der (oder die) Anker mitsamt dem oder den daran befestigten Permanentmagneten zumindest teilweise in den Rahmen eintauchen kann (können); und
   wobei der (die) Anker so ausgestaltet ist (sind),
   dass dessen zunehmendes Eintauchen in den Rahmen (11) während einer Hubbewegung zwar die Reluktanz des Magnetkreises vermindert (vermindern), den oder die Permanentmagnete aber zumindest nicht vollständig kurzschließt, und dass der (oder die) Anker sowie der Rahmen geometrisch so ausgestaltet sind, dass zum Ende des Hubes eine Haltekraft auftritt,

   **dadurch gekennzeichnet,**
   **dass** der Antrieb zwei mit Permanentmagneten (41, 42) bestückte Anker (21, 22) und zwei Induktionsspulen (31, 32) aufweist, wobei die Anker über eine Schubstange (71) starr miteinander verbunden sind.

2. Antrieb nach Anspruch 1, wobei die Permanentmagnete nur unvollständig in den Rahmen eintauchen.

3. Antrieb nach Anspruch 1 oder 2, **gekennzeichnet dadurch, dass** die Anker rotationssymmetrisch ausgeführt sind und dass die Permanentmagnete (41, 42) aus radial oder diametral polarisierten Ringmagneten oder Kreissegment-Magneten bestehen.

4. Antrieb nach einem der Ansprüche 1 bis 3, **gekennzeichnet dadurch, dass** Rahmen (11) und Spulen (31, 32) nach Art eines Topfmagneten ausgeführt sind, der Antrieb also einen inneren Polkern und ein äußeres Polrohr aufweist, wobei die Anker (21, 22) beispielsweise becherförmig ausgestaltet sind, sodass sich am Anker eine Stirnfläche ergibt, die mit einer korrespondierenden Stirnfläche am Polkern die Ausbildung einer Haltekraft, insbesondere einer Reluktanz-Haltekraft, ermöglicht.

5. Antrieb nach Anspruch 4, wobei Polrohr und Polkern nicht auf gleicher Höhe abschließen sondern zum Zwecke der Kennlinienbeeinflussung auf unterschiedlichen Höhen abschließen und bevorzugt veränderliche magnetische Querschnitte aufweisen.

6. Antrieb nach Anspruch 1 **gekennzeichnet dadurch, dass** die Anker (21, 22) ) einen weichmagnetischen Steg (R) aufweisen, über dessen Abmaße eine Kennlinie des Antriebs beeinflusst wird, und der bevorzugt als Anschlag für die Permanentmagnete (41, 42) dient; oder **gekennzeichnet dadurch, dass** die Anker (21, 22) eine oder mehrere Nuten aufweisen, in welche die Permanentmagnete eingelegt sind, wobei die Permanentmagnete bevorzugt als Kreissegmente ausgebildet sind und/oder in der einen oder mehreren Nuten vergossen sind.

7. Antrieb nach einem oder mehreren der Ansprüche 1 bis 6 **gekennzeichnet dadurch, dass** ein Kurzschluss des Permanentmagneten durch einen Luftspalt senkrecht zur Bewegungsrichtung des Ankers (21, 22) vermieden wird, sodass durch dessen geometrische Ausgestaltung eine Kennlinie des Antriebs beeinflusst wird.

8. Antrieb nach Anspruch 7 **gekennzeichnet dadurch, dass** der Luftspalt mit einem Werkstoff mit guten Gleitlagereigenschaften gefüllt ist.

9. Antrieb nach Anspruch 8 **gekennzeichnet dadurch, dass** der Luftspalt mit einem elektrisch gut leitenden, vorzugsweise metallischen Werkstoff gefüllt wird, um die Dynamik des Antriebs zu vermindern.

10. Antrieb nach einem der vorangegangenen Ansprüche **gekennzeichnet dadurch, dass** er zwischen den Spulen (31, 32) einen magnetischen, insbesondere einen weichmagnetischen Kurzschluss (K) aufweist, der so ausgelegt ist, dass bei der Nennleistung des Antriebs im statischen Fall der weichmagnetische Werkstoff, der den Kurzschluss bildet, nicht magnetisch sättigt.

11. Antrieb nach einem der vorangegangenen Ansprüche **gekennzeichnet dadurch, dass** die Spulen (31, 32) in Reihe geschaltet sind und gleichsinnig bestromt werden und dass außerdem die Permanentmagnete (41, 42) gleichsinnig polarisiert sind.

12. Antrieb nach einem oder mehreren der Ansprüche 1 bis 11 **gekennzeichnet dadurch, dass** er zusätzlich mit einem Federsystem ausgestattet ist, welches das Ankersystem aus jeder der beiden Hubendlagen in Richtung der Hubmittellage treibt.

13. Antrieb nach einem oder mehreren der Ansprüche 1 bis 11 **gekennzeichnet dadurch, dass** der Antrieb als monostabilen Umkehrhubmagneten mit einem Federsystem ausgestaltet ist, bei welchem die auf das Ankersystem wirkende Reluktanzkraft im stationären, unbestromten Fall nur in der einen, nicht jedoch in der anderen Hubendlage größer ist als die zugehörige Federkraft, wobei Feder und Antrieb so auf einander abgestimmt sind, dass die Summe aus Federkraft und Reluktanzkraft im stationären, unbestromten Fall an jedem Punkt des Stellweges das gleiche Vorzeichen aufweist.

14. Verriegelungseinheit, insbesondere Maschinenverriegelung, mit einem Antrieb nach einem oder mehreren der Ansprüche 1 bis 13.

**Claims**

1. Drive, which comprises at least one armature (21), at least one soft magnetic frame (11), at least one coil (31), as well as at least one permanent magnet (41) which is fastened to the armature or armatures,

   wherein the frame and the armature are configured such that the magnetic flux produced by energizing the coil(s) (31) at least partially passes through the permanent magnet(s) (41) so that a force acts on it/them which is transferred to the armature,
   the arrangement of armature, frame and permanent magnet(s) is configured in this respect such that the magnetic flux produced by the coil or coils (31) perpendicular to the direction of polarization of the permanent magnet or magnets is at least partially inhomogeneous during the stroke movement, that is the magnetic flux density caused by the coil or coils (31) and sensed by permanent magnet or magnets (41) has a gradient perpendicular to the direction of polarization of the permanent magnets (41);
   wherein the armature (21) and the frame (11) are configured such that the armature or armatures, together with the permanent magnet or magnets fastened thereto, can at least partially dip into the frame, and
   wherein the armature(s) is/are designed such that its/their increasing dipping into the frame (11) during a stroke movement admittedly reduces the reluctance of the magnetic circuit, but does not (completely) short-circuit the permanent magnet or magnets; and the armature (or armatures) and the frame are geometrically configured such that a holding force occurs at the end of the stroke,
   **characterized in that**
   the drive comprises two armatures (21, 22) equipped with permanent magnetnt magnets (41, 42) and two inductance coils (31, 32), wherein the armatures are rigidly connected ton one another via a push rod (71).

2. Driva according to claim 1, wherein the permanent magnets only incompletely dive into the frame.

3. Drive according to claim 1 or 2, **characterized in that** the armatures are designed as rotationally symmetrical; and **in that** the permanent magnets (41, 42) consist of radially or diametrically polarized ring magnets or circle segment magnets.

4. Drive in accordance with any one of claims 1 to 3, **characterized in that** the frame (11) and the coils (31, 32) are configured in the manner of a pot magnet, that is the drive comprises an inner pole core and an outer pole tube,

EP 3 061 104 B1

wherein the armatures (21, 22) are designed, for example, in beaker shape so that a front surface results at the armature which allows the formation of a retaining force, in particular a reluctance retaining force, with a corresponding front surface at the pole core.

5. Drive according to claim 4, wherein the pole tube and the pole core do not end at the same height, but rather end at different heights for the purpose of characteristic influencing and preferably have variable magnetic cross-sections.

6. Drive in accordance with claim 1, **characterized in that** the armatures (21, 22) have a soft magnetic web (R) via whose dimensions the characteristics of the drive are influenced and which preferably serves as an abutment for the permanent magnets (41, 42);
or **characterized in that** the armatures (21, 22) comprise one or more grooves into which the permanent magnets are placed, wherein the permanent magnets are preferably formed as circle segments and/or are cast in the one or more grooves.

7. Drive in accordance with one or more of the claims 1 to 6, **characterized in that** a short circuit of the permanent magnet by an air gap perpendicular to the direction of movement of the armature (21, 22) is avoided such that a characteristic of the drive is influenced by its geometric design.

8. Drive in accordance with claim 7, **characterized in that** the air gap is filled with a material having good sliding bearing properties.

9. Drive in accordance with claim 8, **characterized in that** the air gap is filled with an electrically easily conductive, preferably metallic material to reduce the dynamics of the drive.

10. Drive in accordance with any one of the preceding claims, **characterized in that** it has a magnetic, in particular a soft-magnetic short circuit (K) between the coils (31, 32) which is configured such that the soft magnetic material which forms the short-circuit does not magnetically saturate at the nominal power of the drive in the static case.

11. Drive in accordance with any one of the preceding claims, **characterized in that** the coils (31, 32) are connected in series and are energized in the same direction, and **in that** the permanent magnets (41, 42) are moreover polarized in the same direction.

12. Drive in accordance with one or more of the claims 1 to 11, **characterized in that** it is equipped with a spring system which drives the armature system out of each of the two end stroke positions in the direction of the center stroke position.

13. Drive in accordance with one or more of the claims 1 to 11, **characterized in that** the drive is configured as a monostable reverse stroke magnet with a spring system, in which the reluctance force acting on the armature system is greater only in one stroke end position, but not in the other stroke end position, the the associated spring force, wherein spring and drice are adapted to one another in such a way that the sum of spring force and reluctance force has the same sign across the entire stroke in the stationary non-energized case.

14. Latching unit, in particular a machine latch, having a drive in accordance with one or more of the claims 1 to 13.

**Revendications**

1. Entraînement, qui comporte au moins un induit (21), au moins une carcasse en matériau magnétique doux (11), au moins une bobine (31) ainsi qu'au moins un aimant permanent (41), qui est fixé sur le ou les induits,

la carcasse et l'induit étant réalisés de telle manière que le flux magnétique généré par l'alimentation en courant de la (des) bobine(s) (31) pénètre au moins en partie dans le (les) aimant(s) permanent(s) (41), de telle sorte qu'une force agit sur celui-ci (ceux-ci), qui est transmise à l'induit ;
l'agencement formé par l'induit, la carcasse et le (les) aimant(s) permanent(s) étant conçu de telle manière que le flux magnétique généré par la ou les bobines (31) perpendiculairement à la direction de polarisation du ou des aimants permanents est au moins en partie non homogène pendant le mouvement de levage, la densité de flux magnétique engendrée par la ou les bobines (31) et perçue par le (les) aimant(s) permanent(s) (41) présentant donc un gradient perpendiculaire à la direction de polarisation des aimants permanents (41),

9

l'induit (21) et la carcasse (11) étant réalisés de telle manière que le (ou les) induit(s) avec le ou les aimants permanents fixés à celui-ci (ceux-ci) peut (peuvent) plonger au moins en partie dans la carcasse ; et

le (les) induit(s) étant conçu(s) de telle manière que sa (leur) plongée croissante dans la carcasse (11) pendant un mouvement de levage diminue (diminuent) certes la réluctance du circuit magnétique, mais ne court-circuite pas entièrement le ou les aimant(s) permanent(s), et que le (ou les) induit(s) ainsi que la carcasse sont conçus géométriquement de telle manière qu'une force de retenue se produit à la fin du levage,

**caractérisé en ce que**

l'entraînement comporte deux induits (21, 22) équipés d'aimants permanents (41, 42) et deux bobines d'induction (31, 32), les induits étant reliés l'un à l'autre de manière rigide par le biais d'une barre de poussée (71).

2. Entraînement selon la revendication 1, dans lequel les aimants permanents plongent seulement de manière incomplète dans la carcasse.

3. Entraînement selon la revendication 1 ou 2, **caractérisé en ce que** les induits sont réalisés à symétrie de révolution et **en ce que** les aimants permanents (41, 42) sont constitués d'aimants en anneau ou d'aimants en segment de cercle polarisés radialement ou diamétralement.

4. Entraînement selon l'une des revendications 1 à 3, **caractérisé en ce que** la carcasse (11) et les bobines (31, 32) sont réalisées à la manière d'un aimant à culasse, l'entraînement comporte donc un noyau de pôle intérieur et un tube de pôle extérieur, les induits (21, 22) étant par exemple conçus en forme de coupe, de telle sorte qu'il en résulte une surface frontale sur l'induit, qui permet la formation d'une force de retenue, en particulier une force de retenue à réluctance, avec une surface frontale correspondante sur le noyau de pôle.

5. Entraînement selon la revendication 4, dans lequel le tube de pôle et le noyau de pôle ne se terminent pas à la même hauteur mais se terminent à des hauteurs différentes et présentent de préférence des coupes transversales magnétiques variables dans le but d'influencer les courbes caractéristiques.

6. Entraînement selon la revendication 1, **caractérisé en ce que** les induits (21, 22) comportent une saillie (R) en matériau magnétique doux, dont les dimensions permettent d'influencer une courbe caractéristique de l'entraînement, et qui sert de préférence de butée pour les aimants permanents (41, 42) ; ou **caractérisé en ce que** les induits (21, 22) comportent une ou plusieurs rainures, dans lesquelles les aimants permanents sont insérés, les aimants permanents étant de préférence réalisés sous la forme de segments de cercle et/ou étant scellés dans la ou les plusieurs rainures.

7. Entraînement selon une ou plusieurs des revendications 1 à 6, **caractérisé en ce qu'**un court-circuit de l'aimant permanent est empêché par un entrefer perpendiculaire à la direction de déplacement de l'induit (21, 22), de telle sorte que, par sa conception géométrique, une courbe caractéristique de l'entraînement est influencée.

8. Entraînement selon la revendication 7, **caractérisé en ce que** l'entrefer est rempli d'un matériau à bonnes propriétés de palier lisse.

9. Entraînement selon la revendication 8, **caractérisé en ce que** l'entrefer est rempli d'un matériau à bonne capacité de conduction électrique, de préférence en métal, pour diminuer la dynamique de l'entraînement.

10. Entraînement selon l'une des revendications précédentes, **caractérisé en ce qu'**il comporte, entre les bobines (31, 32), un court-circuit (K) magnétique, en particulier en matériau magnétique doux, qui est conçu de telle manière que, à la puissance nominale de l'entraînement, dans le cas statique, le matériau magnétique doux, qui forme le court-circuit, ne sature pas magnétiquement.

11. Entraînement selon l'une des revendications précédentes, **caractérisé en ce que** les bobines (31, 32) sont branchées en série et sont alimentées en courant dans le même sens et **en ce que**, en outre, les aimants permanents (41, 42) sont polarisés dans le même sens.

12. Entraînement selon une ou plusieurs des revendications 1 à 11, **caractérisé en ce qu'**il est en outre équipé d'un système de ressort, qui entraîne le système d'induit de chacune des deux positions de fin de course en direction de la position de milieu de course.

13. Entraînement selon une ou plusieurs des revendications 1 à 11, **caractérisé en ce que** l'entraînement est conçu sous la forme d'un électroaimant de manutention bidirectionnel monostable avec un système de ressort, dans lequel la force de réluctance agissant sur le système d'induit est, dans le cas stationnaire non alimenté en courant, supérieure à la force du ressort associée uniquement dans une mais non dans l'autre position de fin de course, le ressort et l'entraînement étant adaptés l'un à l'autre de telle manière que la somme de la force du ressort et de la force de réluctance, dans le cas stationnaire non alimenté en courant, présente le même signe en tout point de la course de réglage.

**14.** Unité de verrouillage, en particulier verrouillage de machine, comprenant un entraînement selon une ou plusieurs des revendications 1 à 13.

Fig. 1

**EP 3 061 104 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- GB 2325567 A
- GB 2197754 A
- EP 114354 A2
- FR 2934923 A1
- EP 1430490 A1